**Europäisches Patentamt**

**European Patent Office**

**Office européen des brevets**

(19)

(11) Veröffentlichungsnummer : **0 231 749 B1**

(12) # EUROPÄISCHE PATENTSCHRIFT

(45) Veröffentlichungstag der Patentschrift :
05.06.91 Patentblatt 91/23

(51) Int. Cl.$^5$ : **C03C 17/23, G01D 11/26**

(21) Anmeldenummer : **87100080.8**

(22) Anmeldetag : **07.01.87**

(54) **Korrosionsbeständige Druckkesselschaugläser.**

(30) Priorität : **20.01.86 DE 3601500**

(43) Veröffentlichungstag der Anmeldung :
**12.08.87 Patentblatt 87/33**

(45) Bekanntmachung des Hinweises auf die
Patenterteilung :
**05.06.91 Patentblatt 91/23**

(84) Benannte Vertragsstaaten :
**AT BE CH DE ES FR GB IT LI NL**

(56) Entgegenhaltungen :
**DE-A- 2 029 321**
**FR-A- 2 181 430**

(72) Erfinder : **Hinz, Paul**
**Jupiterweg 11**
**W-6500 Mainz-Finthen (DE)**
Erfinder : **Dislich, Helmut, Dr.**
**Gerhart-Hauptmann-Strasse 12**
**W-6501 Budenheim (DE)**
Erfinder : **Weber, Gerhard**
**Heyerstrasse 18**
**W-6509 Schornsheim (DE)**

(74) Vertreter : **Dr. Fuchs, Dr. Luderschmidt**
**Dipl.-Phys. Seids, Dr. Mehler Patentanwälte**
**Abraham-Lincoln-Strasse 7**
**W-6200 Wiesbaden (DE)**

(73) Patentinhaber : **Schott Glaswerke**
**Hattenbergstrasse 10**
**W-6500 Mainz (DE)**
**BE CH DE ES FR IT LI NL AT**
Patentinhaber : **Carl-Zeiss-Stiftung**
**Schott Glaswerke Hattenbergstrasse 10**
**W-6500 Mainz (DE)**
**GB**

EP 0 231 749 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind, gegebenenfalls thermisch gehärtete und damit vorgespannte, Druckkesselschaugläser, die bei Temperaturen bis zu 300°C korrosionsbeständig sind.

Bekanntlich werden in Druckkesseln häufig alkalische wässrige Lösungen bei Temperaturen bis zu 300°C benutzt, gegen die die verwendeten Druckkesselschaugläser, Weichgläser oder Hartgläser, thermisch vorgespannt oder nicht vorgespannt, nicht hinreichend resistent sind. Das hat Gefahrenmomente beim Betrieb eines solchen Kessels zur Folge, und die Schaugläser müssen häufig ausgewechselt werden, was aufwendig ist.

Es ist bekannt, zum Schutz der Kesselschaugläser Glimmerplatten diesen vorzuschalten. Das führt zu Verbesserungen, da Glimmer alkalistabiler als die verwendeten Gläser sind, jedoch ist der Schutz nur begrenzt und von der Fundortqualität der Glimmer abhängig. Hinzu kommt, daß wegen des mengenmäßig begrenzten und zur Neige gehenden Vorkommens von Glimmern in optischer Qualität deren Preis insbesondere in letzter Zeit dramatisch gestiegen ist und den der zu schützenden Schaugläser inzwischen überstiegen hat. Damit liegt keine zukunftsweisende Problemlösung mehr vor.

Es ist weiterhin bekannt, Schaugläser innenseitig mit Kunststoff zu beschichten. Nachteilig ist hierbei, daß die Temperaturstabilität der verwendeten Kunststoffe auf 200°C begrenzt ist, Kessel aber häufig bis 300°C betrieben werden. Auch unter 200°C treten jedoch bereits Beschädigungen des Kunststoffs und Ablösungen von der Glasunterlage durch Wasserdampfdiffusion und Erosion aufgrund starker Strömungen am Kesselfenster auf. In all diesen Fällen muß das gesamte Schauglas ausgewechselt werden, was mit erheblichem Aufwand verbunden ist.

Aus diesen Gründen wurde vorgeschlagen, das Schauglas mit einer nur mechanisch fixierten und damit auswechselbaren, transparenten Kunststoff-Folie zu versehen, die gegen aggressive, insbesondere alkalische Lösungen beständig ist. Dafür wurden transparente Fluorpolymere vorgeschlagen, insbesondere Polytetrafluorethylen-hexafluorpropylen-Copolymerisate gemäß AT-B- 329 790. Diese sind stabil gegen typische, alkalische Kesselspeisewässer, die bei einem pH = 10 und bei 200°C Phosphat- und Carbonationen enthalten. Nachteilig ist auch hier, daß die Stabilität auf 200°C begrenzt ist. Außerdem diffundiert Wasserdampf durch die Folie hindurch in den Raum zwischen Folie und Schauglas und behindert die Sicht. Auch ist der Preis solcher Perfluorpolymerer erheblich, und zusammen mit den genannten Nachteilen ergibt sich nur eine auf wenige Spezialfälle begrenzte Problemlösung.

Ziel der vorliegenden Erfindung sind korrosionsstabile, bei allen vorkommenden Betriebstemperaturen, d.h. bis 300°C haltbare Schaugläser.

Ein besonderes Ziel der Erfindung sind gehärtete, d.h. vorgespannte Schaugläser, die bei Temperaturen bis zu 300°C korrosionsbeständig sind. Dieses Ziel wird mit Schaugläsern gemäß den Patentansprüchen 1 und 2 erreicht.

Ein weiteres Ziel der Erfindung ist ein Verfahren zur Aufbringung von Schichten auf Kesselschaugläser, die diesen Schaugläsern Korrosionsbeständigkeit bis 300°C verleihen. Dieses Ziel wird mit Verfahren gemäß den Patentansprüchen 3 und 4 erreicht.

Die Schaugläser gemäß der vorliegenden Erfindung sind somit dadurch gekennzeichnet, daß sie, zumindest zur Kesselinnenseite hin, mit fest haftenden Metalloxidschichten belegt sind, die eine wesentlich höhere Korrosionsstabilität, insbesondere gegen alkalische wässrige Lösungen, aufweisen als die Substratgläser selbst. Korrosionsverhindernde Metalloxidschichten sind zwar bekannt, jedoch nicht auf Schaugläsern. Der nächstliegende Stand der Technik sind zementlaugenfeste, beschichtete E-Glasfasern, wobei als Metalloxide Zinnoxid und Zirkonoxid verwendet werden, die – begrenzt – gegen alkalischen Angriff schützen. Das sind jedoch Schutzeffekte bei Normaltemperatur, und das Verhalten der genannten Metalloxide bei 300°C war weder bekannt noch voraussagbar, was auch für andere Oxide und Mischoxide gilt.

Es gibt zwar in einschlägigen Hand- und Lehrbüchern auch Aussagen über die Löslichkeit verschiedener Oxide in Massen wie Pulvern, Formkörpern o.ä., die jedoch nicht auf Schichten übertragbar sind. Der Grund hierfür liegt vermutlich darin, daß nicht nur die chemische Natur des Oxids eine Rolle spielt, sondern ebenso und insbesondere der Aufbau der Schicht, deren Packungsdichte groß oder klein sein kann. Bei kleiner Packungsdichte ist die Schicht poröser, damit angreifbarer und durchlässiger, bei großer Packungsdichte ist sie weniger angreifbar und weniger durchlässig. Die Packungsdichte wiederum hängt ab von der Art des Beschichtungsverfahrens und der gewählten Verfahrensparameter und wird auch von der chemischen und Oberflächenbeschaffenheit des zu beschichtenden Substrats beeinflußt. Das Gleiche gilt auch für die notwendige gute Haftung der Oxidschicht auf dem Substrat.

Ein besonderes Merkmal der vorliegenden Erfindung besteht darin, daß im Falle der Verwendung thermisch gehärteter Schaugläser diese Oxidschichten die Prozedur der thermischen Härtung, also Temperaturen bis 800°C und plötzliches Abschrecken, damit schnelle Ausdehnungsänderung bei verschiedenen Ausdehnungskoeffizienten von Substrat und Schicht, aushalten müssen ohne Verlust ihrer Funktionsfähigkeit der Korrosionsverhinderung, also ohne Reißen oder gar Krakelieren der Schicht oder Ablösung vom Substrat.

Nach dem Stand der Technik sind zwar viele Korrosionsschutzschichten, darunter auch $SnO_2$, bekannt, die jedoch nur gegen milde Beanspruchung wirken, z.B. gem. DIN 50 018. Bei Kesselspeisewässern bis zu 300°C liegen so massive Angriffsmechanismen der Spaltung von Netzwerkbindungen, z.B. Si-O-Si- vor, daß in Tagen mehrere mm abgetragen sind. Dem Fachmann ist geläufig, daß aus bekanntem Schutz gegen milden Angriff kein Schluß auf Schutz gegen radikalen Angriff gezogen werden kann. Der bis heute ausschließliche extrem teure Gebrauch von Glimmer-Vorsatzscheiben beweist dies schlagend. Außer diesem und den nur begrenzt anwendbaren Fluorpolymeren ist bis heute kein Schutz von Druckkesselschaugläsern gegen Kesselspeisewasser bekannt geworden, weder in Patenten, noch in Publikationen oder Produkten. Dies belegt den grundlegenden Unterschied zu den vielen klassischen Korrosionsschutzschichten gemäß Stand der Technik.

Beim gemäß Unteranspruch 3 gewählten wirtschaftlichen Sprühverfahren werden dicke Schichten (0,3 bis 1 μm) in einem Arbeitsschritt aufgebracht. Diese dicken Schichten sind in optischer Hinsicht etwas inhomogen, was allerdings keinen gravierenden Nachteil im Anwendungsfall der Schaugläser darstellt.

Ein derart hergestelltes $SnO_2$ hat eine erhöhte elektrische Leitfähigkeit und Infrarotreflexion, die im Anwendungsfall der Schaugläser nicht erforderlich, ggf. auch nicht erwünscht ist. Diese Nachteile können durch Verwendung eines Mischoxides aus $SnO_2$ und $Cr_2O_3$ gemindert oder ganz beseitigt werden. Nicht erwünscht ist die IR-Reflexion bei der Härtung von Schaugläsern, da das Aufheizen der Schaugläser auf die erforderlichen Temperaturen bis zu 800°C durch die Wärmereflexion behindert wird. Aus diesem Grunde ist der Einbau von $Cr_2O_3$ eine bevorzugte Maßnahme, die im Prinzip bereits beschrieben ist in DE-B- 12 04 369 und für die nur im Zusammenhang mit Anspruch 1 Schutz beansprucht wird.

Die Erfindung wird durch nachstehende Ausführungsbeispiele näher erläutert.

Beispiel 1

Aus einer Lösung mit den Ausgangsverbindungen
845 ml Methylalkohol
155 ml Zinntetrachlorid
wird auf ein Kesselschauglas bei Temperaturen bis 700°C eine ca. 0,8 μm dicke Schicht aufgesprüht. Die Schicht ist transparent für sichtbares Licht. Langwelliges, zur Härtung erforderliches Infrarotlicht der Wellenlängen λ ≧ 3 μm wird zu über 70% reflektiert und behindert damit den notwendigen Aufheizprozeß zum Härten.

Beispiel 2

Zu einer Lösung gemäß Beipiel 1 werden 3,8 g Chrom (III) chlorid × 6 $H_2O$ zugesetzt und darin aufgelöst. Auf ein Kesselschauglas wird bei 700°C eine ca. 0,8 μm dicke Schicht aufgesprüht. Die Schicht ist transparent für sichtbares und langwelliges IR-Licht von λ > 3 μm. Die so beschichteten Schaugläser lassen sich in einem normalen Härteprozeß vorspannel, ohne daß die Schicht einen Einfluß auf die Härtbarkeit ausübt.

Beispiel 3

Nach den Beispielen 1 und 2 hergestellte, im wesentichen aus $SnO_2$ und gegebenenfalls $Cr_2O_3$ bestehende Schichten zeigen in alkalischen Kesselwässern hervorragende Schutzeigenschaften. So verhindert diese Schicht eine Glaskorrosion über mindestens 70 Stunden bei 225°C und 25 bar im Autokaven bei einem pH-Wert von 10. Ungeschütztes, an sich hoch resistentes Borosilikatglas wird in derselben Zeit um 0,6 mm dünner, d.h. es wird aufgelöst.

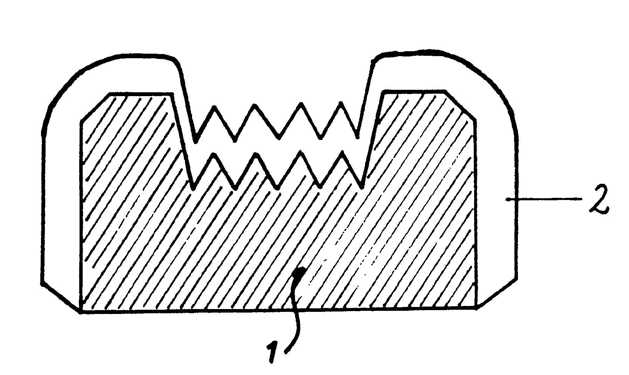

In der Zeichnung ist der Gegenstand der Erfindung dargestellt. Die Zeichnung zeigt als horizontalen Querschnitt ein beschichtetes Rillenschauglas 1 mit einer Metalloxidschicht 2 gemäß der vorliegenden Erfindung.

**Ansprüche**

1. Gegen Kesselspeisewässer bei erhöhter Temperatur bis maximal 300°C korrosionsfeste Druckkessel-Schaugläser, dadurch gekennzeichnet, daß sie, zumindest zur kesselinnenseite hin, mit Zinndioxidschichten belegt sind.

2. Schaugläser nach Anspruch 1, dadurch gekennzeichnet, daß die Zinndioxidschicht zusätzlich $Cr_2O_3$ enthält.

3. Verfahren zur Erzeugung korrosionsfester $SnO_2$-Schichten auf Schaugläsern gemäß den Ansprüchen 1 und 2, dadurch gekennzeichnet, daß die Schichten in einem Sprühverfahren bei 500°C-700°C erzeugt werden.

4. Verfahren nach Anspruch 3, dadurch gekennzeichnet, daß als wesentliches Sprühgut $SnCl_4$ und-/oder $CrCl_3$ verwendet werden.

**Claims**

1. Pressure-vessel inspect ion glasses which are corrosion-resistant to boiler feed water at elevated temperature of up to a maximum of 300°C, **characterized in that** they are covered with stannic oxide coatings at least towards the interior of the boiler.

2. Inspection glasses according to Claim 1,

characterized in that the stannic oxide coating additionally contains $Cr_2O_3$.

3. A process for producing corrosion-resistant $SnO_2$ coatings on inspection glasses according to Claims 1 and 2, **characterized in that** the coatings are produced in a spraying process at 500°C to 700°C.

4. A process according to Claim 3, **characterized in that** $SnCl_4$ and/or $CrCl_3$ are used as the essential spraying material.

## Revendications

1. Verres pour regards d'autoclaves résistant à la corrosion par l'eau d'alimentation aux températures élevées jusqu'à 300°C maximum, **caractérisés** en ce qu'ils sont revêtus de couches d'oxyde stannique au moins sur la face interne côté chaudière.

2. Verres pour regards selon la revendication 1, **caractérisés** en ce que la couche d'oxyde stannique contient en plus du $Cr_2O_3$.

3. Procédé pour la production de couches de $SnO_2$ résistant à la corrosion sur des verres pour regards selon les revendications 1 et 2, **caractérisé** en ce que les couches sont produites selon un procédé par aspersion à 500°C-700°C.

4. Procédé selon la revendication 3, **caractérisé** en ce qu'on utilise essentiellement comme produit d'aspersion du $SnCl_4$ et/ou du $CrCl_3$.